# EUROPEAN PATENT SPECIFICATION

(11) **EP 3 050 001 B1**
(45) Date of publication and mention of the grant of the patent: **27.02.2019**
(21) Application number: 14795695.7
(22) Date of filing: 24.09.2014
(51) Int. Cl.: G06K 19/07, G08C 17/00

(54) **A METHOD AND SYSTEM FOR INITIATING A FUNCTION IN AN ELECTRONIC DEVICE**
VERFAHREN UND SYSTEM ZUR INITIIERUNG EINER FUNKTION IN EINER ELEKTRONISCHEN VORRICHTUNG
PROCÉDÉ ET SYSTÈME POUR DÉCLENCHER UNE FONCTION DANS UN DISPOSITIF ÉLECTRONIQUE

(30) Priority: 27.09.2013 US 201361883711 P; 28.07.2014 US 201414444188
(43) Date of publication of application: 03.08.2016
(73) Proprietor: Google Technology Holdings LLC, Mountain View, CA 94043 (US)
(72) Inventor: ZHAO, Hong, Naperville, Illinois 60564 (US); SHOSTAK, Pavel A., Evanston, Illinois 60201 (US)
(74) Representative: Boult Wade Tennant LLP
(86) International application number: PCT/US2014/057271
(87) International publication number: WO 2015/048166

(56) References cited:
- WO-A1-03/085594
- WO-A1-2010/061317
- US-A1- 2005 093 374

## Description

### BACKGROUND

The present disclosure relates to initiating a function in an electronic device and more particularly to initiating, by a tag device that is coupled to the electronic device, the function in the electronic device.

Modern day electronic devices perform many useful functions, but these devices are operated when the device is within a user's grasp. In order to initiate a function in the device, such as turning it on or off, a user has to be close enough to physically contact the device. If the user cannot physically contact the device because, for example, the device is misplaced, the user cannot turn the device on or off. Further, electronic devices have many different configurations, settings and applications. In order to change these settings, a user has to physically manipulate the device.

WO 03/085594 discloses a method for activating a method for activating a user interface of a mobile terminal or device having an ISO14443 smart card attached in a ISO7816 reader, where the mobile device monitors the state of the interactive ISO7816 interface, the ISO14443 smart card changes the state of one or more of the ISO7816 contacts when it needs user interaction during contactless communication, when a state change occurs that did not originate in the mobile device, an interrupt is generated that communicates to the mobile device that smart card requires its services.

US 2005/093374 discloses a power control circuit used to control the power supplied to a circuit from a power source. The power control circuit is operable to connect and disconnect the power source from the circuit. The power control circuit connects the power source to the circuit in response to an externally applied magnetic field.

WO 2010/061317 discloses a system for providing wireless control on an electronic device. The system comprises a control station and a wireless device. The control station is configured to send a wireless exciting signal and a wireless control command. The wireless device comprises an exciter module and a processor module, wherein the exciter module is configured to collect power from the wireless exciting signal and subsequently change a state of the processor module from an inactive state to an active state, and the processor module is configured to receive the control command and adjust functions of the electronic device in accordance with the control command.

### SUMMARY

The present invention provides a method performed by an interrogator device for controlling a function in an electronic device according to claim 1, an interrogator device according to claim 6, a method performed by a tag device for initiating a function in an electronic device according to claim 8 and a tag device according to claim 11.

### BRIEF DESCRIPTION OF THE FIGURES

The accompanying figures, where like reference numerals refer to identical or functionally similar elements throughout the separate views, together with the detailed description below, are incorporated in and form part of the specification, and serve to further illustrate embodiments of concepts that include the claimed embodiments, and explain various principles and advantages of those embodiments.
FIG. 1 is a schematic diagram illustrating example internal components of a tag device and an example environment within which may be implemented methods and apparatus for initiating, by the tag device coupled to an electronic device, a function in the electronic device in accordance with the present teachings.
FIG. 2 is a schematic diagram illustrating example internal components of a tag device in accordance with the present teachings.
FIG. 3 is a schematic diagram illustrating example internal components of an interrogator device and an example environment in which may be implemented methods and apparatus in accordance with the present teachings.
FIG. 4 is one example of a message sequence chart illustrating communications that occur between an interrogator device, a tag device and an electronic device in accordance with the present teachings.
FIG. 5 is a flow diagram illustrating one example of a method for determining to initiate a function in an electronic device based on a comparison of a signal level with at least one threshold.
FIG. 6 is one example of a message sequence chart illustrating communications that occur between an interrogator device and a tag device in accordance with the present teachings.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present disclosure. In addition, the description and drawings do not necessarily require the order illustrated. It will be further appreciated that certain actions and/or steps may be described or depicted in a particular order of occurrence while those skilled in the art will understand that such specificity with respect to sequence is not actually required.

The apparatus and method components have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein.

### DETAILED DESCRIPTION

Generally speaking, pursuant to the various embodiments, the present disclosure provides for a method, performed by a tag device that is coupled to an electronic device, for initiating a function in the electronic device. In one embodiment, the method includes receiving a signal from an interrogator device, and determining from the signal to initiate a function in the electronic device. The method also includes signaling the electronic device to initiate the function.

In another implementation a tag device includes a signal reception and processing element configured to receive a signal from an interrogator device and determine from the signal to initiate a function in an external electronic device. A representative tag device also includes a control element coupled to the signal reception and processing element. The control element is configured to signal the electronic device to initiate the function.

In accordance with yet another embodiment is a method performed by an interrogator device for controlling a function in an electronic device. The method includes determining, from the tag device coupled to an electronic device, a status for the electronic device. One embodiment includes sending a signal to the tag device to control a function in the electronic device based on the status for the electronic device.

If an electronic device is coupled with a tag device that is configured in accordance with the present teachings, a user having such an interrogator device is able to remotely discover and initiate a function in the electronic device. One example function is turning on the electronic device when it is currently off. In other examples other functions are initiated in the electronic device. In one scenario, one or more different functions are initiated in the electronic device where the number and type of function is dependent on a distance between the tag device and the interrogator device. In still another instance, the tag device is configured to update one or more settings in the electronic device.

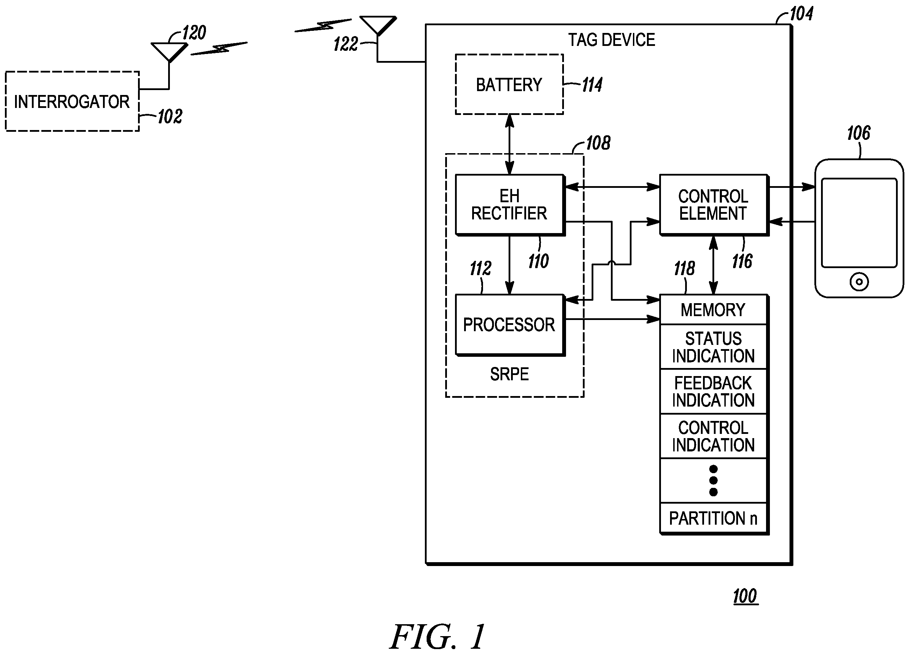

Referring to the drawings, and in particular to FIG. 1, illustrated therein are example internal components of a tag device and an example environment within which may be implemented methods and apparatus for initiating, by the tag device coupled to an electronic device, a function in the electronic device in accordance with the present teachings. This particular embodiment includes an interrogator device 102 configured to wirelessly communicate with a tag device 104. The tag device 104 is illustratively coupled to an electronic device 106 on which the tag device 104 is configured to initiate a function.

In one embodiment, the interrogator device 102 and the tag device 104 communicate using short range communications, such as, radio frequency identification (RFID) standards. Passive ultra-high frequency (UHF) RFID communications illustratively operate within the range of 1-100 meters, while other forms of wideband RFID successfully operates at ranges of up to 200 meters. In one embodiment the interrogator 102 and tag device 104 are compatible with RFID standards including International Organization for Standardization (ISO) class 0-5, Electronic Product Code (EPC) Generation 2, or another EPCglobal, or other RFID standard. In still another embodiment, the interrogator device 102 and the tag device 104 are configured to communicate using a proprietary RFID standard.

In some example RFID systems the interrogator device 102 transmits a signal and the tag device 104 harvests energy from the signal and uses the received signal to respond using backscattering. One way to understand backscattering is that current flowing from a transmitting antenna 120 of the interrogator device 102 causes an induced voltage on a receiving antenna 122 of the tag device 104. If the receiving antenna 122 is connected to a load, a current is induced on the receiving antenna 122. The current induced on the receiving antenna 122 is then used to radiate a return signal. The radiated return signal is a backscatter signal detectable by the interrogator device 102. A load generating device, such as a transistor, applies a load to the transmitted backscatter signal to modulate the signal. In this manner, the tag device 104 communicates signals containing data to the interrogator using the backscatter signal.

In this example the tag device 104 is described as using a backscatter signal to communicate with the interrogator device 102. The teachings herein are not limited to communications between the tag device 104 and the interrogator device 102 using just backscattering. In other embodiments the tag device 104 and the interrogator device 102 use inductive coupling, capacitive coupling or any other method of wireless RFID to communicate.

Looking closer now at elements of a representative tag device 104. A representative tag device 104 has a signal reception and processing element (SRPE) 108 which is coupled to a control element 116. The SRPE 108 includes an energy harvesting (EH) rectifier 110 coupled to a processor 112. The processor 112, in one example, is an RFID core processor configured to perform RFID protocol signaling and media access control (MAC) layer functions to maintain a wireless link with the interrogator 102. The processor 112 updates a memory element 118 and interacts with the control element 116. The EH rectifier 110 is configured to extract energy from signals received from the interrogator 102 to power at least some functions and components of the tag device 104. In one instantiation, the EH rectifier 110 indicates to the control element 116 when a level of the extracted energy is reached that is sufficient to signal the electronic device 106 to initiate a function. A representative EH rectifier 110 supplies power to the processor 112, the control element 116, and the memory element 118.

Tag devices vary in their use of a battery 114 as a source of power. If the tag device 104 is passive, it relies entirely on the interrogator 102 as a source of power. A semi-passive tag device 104 uses the internal battery 114 to power its circuits and uses harvested energy to perform wireless transmissions. An active tag device 104 uses the battery 114 to broadcast signals and power its circuits. In other embodiments energy is used from both the EH rectifier 110 and the battery 114 to power one or more circuits of the tag 104 and/or for transmitting signals.

In one embodiment, the control element 116 is configured to initiate function(s) in the electronic device 106 by communicating signals on an output pin using, for example, the Inter-Integrated Circuit (I2C) computer bus protocol or an analog signaling protocol. The analog signals illustratively include data as to which function the electronic device 106 should initiate as well as other information which will be described in relation to the following figures. Further, via these signals the control element 116 and the electronic device 106 are configured to exchange information that is stored in memory 118. In another embodiment, the tag device 104 is not coupled to the electronic device 106 and the control element 116 communicates with the electronic device 106 using a wireless signal, such as RFID, Institute of Electrical and Electronics Engineers (IEEE) 802.11, or some other short range signaling technique. The EH rectifier 110 harvests energy from the wireless signal and transforms this signal from alternating current to direct current and communicates this transformed signal to the control element 116. Based on this transformed signal, the control element 116 determines whether to initiate a function in the electronic device 106. A representative control element 116 is implemented using a microcontroller.

The memory element 118 is at least one of: a volatile memory element, such as random access memory (RAM); or non-volatile memory element, such as a ROM (Read Only Memory), a PROM (Programmable Read Only Memory), an EPROM (Erasable Programmable Read Only Memory), an EEPROM (Electrically Erasable Programmable Read Only Memory), or a Flash memory. In an embodiment, the processor 112 and/or the control element 116 stores data in the memory element 118. In some embodiments, the memory element 118 is integrated with the processor 112 into a single component. However, such a single component still usually has distinct portions/sections that perform the different processing and memory functions.

The memory element 118 is divided into one or more partitions each configured to store a different type of information. The memory element 118 stores data generally related to device information, status, and control associated with various components and operations of the system 100. Three specific pieces of information the memory element 118 is configured to store include a feedback indication, a status indication, and a control indication. The feedback indication signifies whether a level of extracted energy is sufficient to initiate a function in the electronic device 106. The status indication signifies whether the electronic device 106 is at least one of powered on or powered off. The control indication signifies whether the electronic device 106 should be turned on, turned off, or configured in a particular way. Illustratively the memory 118 is also configured to store device information of the electronic device 106, such as a device name, Internet Protocol address, a device type (e.g., Smartphone, printer, door, etc.) and the like.

The interrogator 102 performs functions of an RFID interrogator. As such, the interrogator 102 is configured to emit wireless signals in compliance with one or more RFID standards. In some RFID systems the interrogator is an electronic device dedicated to performing RFID operations. The teachings disclosed herein, however, are not limited to an interrogator dedicated to RFID operations. The interrogator 102 is adaptable to be a component of an electronic device capable of performing other operations unrelated to RFID. In one example, the interrogator 102 is implemented as a subsystem on an electronic device such as a cellular phone, Smartphone, a phablet, a tablet, a camera, a media player, or a wearable device akin to a smart watch or smart glasses, and the like. Configured in such a manner the interrogator performs RFID communications as well as operates as a cell phone, Smartphone, phablet, and so on.

FIG. 1 shows a Smartphone as the electronic device 106 coupled to the tag device 104, but in other examples the electronic device 106 is a cellular phone, a phablet, a tablet, a camera, a media player, a printer, a television, a screen projector, a audio system, and the like. In still other embodiments, the electronic device 106 is an integrated circuit coupled to a mechanical device, such as a door, for example. An electronic device 106 implemented in this manner is able to manipulate the mechanical device (e.g., lock or unlock the door) in response to command(s) sent from the tag device 104. Further, in some example scenarios the electronic device 106 also functions as an interrogator. If the electronic device 106 is configured to operate as an interrogator, it is coupled to the device tag 104 and is able to perform the functions of an interrogator while interacting with another tag device (not pictured).

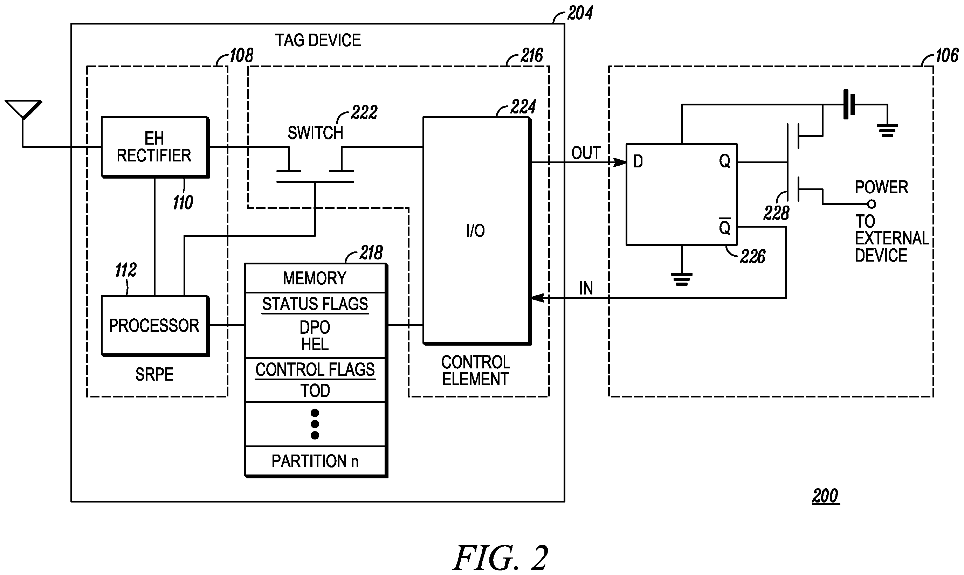

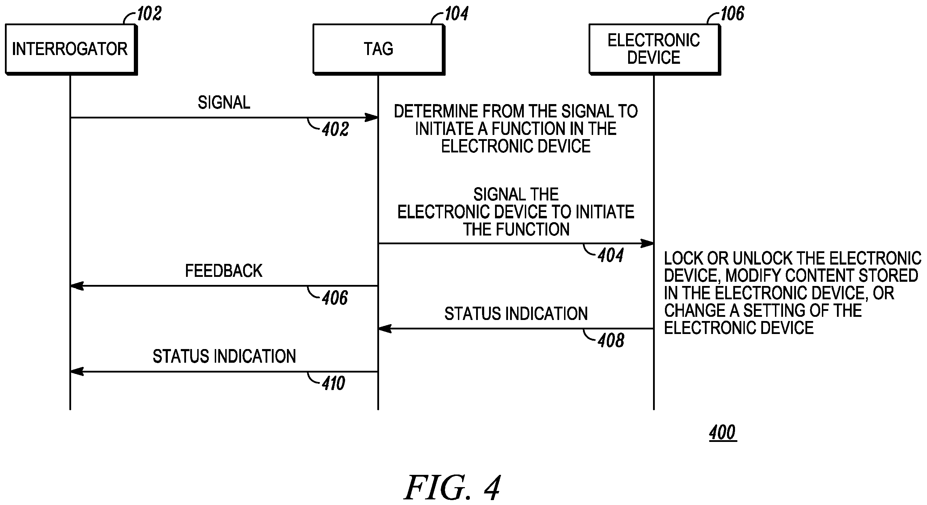

FIG. 2 illustrates another embodiment of a tag device 204 in accordance with the teachings disclosed herein. The tag devices of FIG. 1 and FIG. 2 are similar in that both the devices include an SRPE 108, a control element 216, and a memory 218. The physical composition of the SRPE 108 is similar across FIG. 1 and FIG. 2. The SRPE 108 of FIG. 1 and FIG. 2 both include the EH rectifier 110 and the processor 112, the operations of which are described in conjunction with FIGs. 4-6.

The control element 216 of FIG. 2 further includes, however, a switch 222 and an Input/Output (I/O) component 224. The switch 222 is coupled to the EH rectifier 110 and the I/O component 224. In one implementation example, the switch 222 is a metal-oxide semiconductor field effect transistor switch. The I/O component 224 is configured to output a signal to a latch (flip/flop) 226 via an output pin using a bus protocol (e.g., I2C). An output of the latch 226 is connected with an other switch 228 which initiates power and communicates analog signals to the electronic device 106. The latch 226 also provides an input signal to the tag device 204. The I/O component 224 receives the input signal and illustratively updates the memory element 218 in accordance with the input signal. In one example embodiment the latch 226 and the other switch 228 are part of the electronic device 106. In other embodiments, the latch 226 and the other switch 228 are part of electronic circuitry external to the electronic device 106 and the tag device 204.

The EH rectifier 110 is illustratively configured to communicate an analog signal to the switch 222 where the analog signal represents an amount of energy extracted from the wireless signal that the interrogator 102 sends to the tag device 104. If the level of extracted energy exceeds a threshold amount, the switch 222 is activated. Activation of the switch illustratively results in the analog signal being propagated to the electronic device 106 and initiation of a function within the electronic device 106. Accordingly, the switch 222 is configured to signal the electronic device 106 to initiate the function when the level of the energy exceeds a threshold amount.

In some examples, the control element 216 is provided with a microcontroller in place of the switch 222. The microcontroller receives the analog signal from the EH rectifier 110 and based on the signal level, the microcontroller communicates a variety of signals to the electronic device 106 via the I/O component 224. In yet another embodiment, the I/O component 224 is implemented as a microcontroller. A microcontroller in such an embodiment receives the signal from the switch and based on the signal level, the microcontroller sends an assortment of different signals to initiate different functions within the electronic device 106. In yet another embodiment, the control element 216 includes a microcontroller (not pictured) configured to perform the functions of both the switch 222 and the I/O component 216.

The tag device 204 illustrated in FIG. 2 includes a memory element 218 configured to store information concerning the state of various components and functions of the tag device 204, the interrogator 102, and the electronic device 106. The type and physical configuration of the memory element 218 is substantially similar to the memory element 118 of FIG. 1. FIG. 2, however, illustrates the memory element 218 storing different information than the memory element 118 of FIG. 1. The memory element 218 is configured to include status flags and control flags. The status flags include a device power-on (DPO) flag which indicates whether the electronic device 106 is currently powered on, and a harvested energy level (HEL) flag which indicates whether enough power is harvested to activate a function within the electronic device 106. The control flags indicate whether the electronic device 106 should be turned on. The use of these variables in various methods and operations will be explained further in relation to FIGs. 4-6.

Although, the memory 118 of FIG. 1 is illustrated as storing status information, control information and a feedback indication, and the memory 218 of FIG. 2 is illustrated as having status flags and control flags, in other embodiments the two memories 118, 218 are configured with any combination of status information, control indications, feedback indications, status flags and/or control flags. Further, the status information, feedback indications, control indications, status flags and control flags are only one set of variables that the memories 118, 218 are configured to store. In other embodiments, the memories 118, 218 store other types and varieties of variables and information.

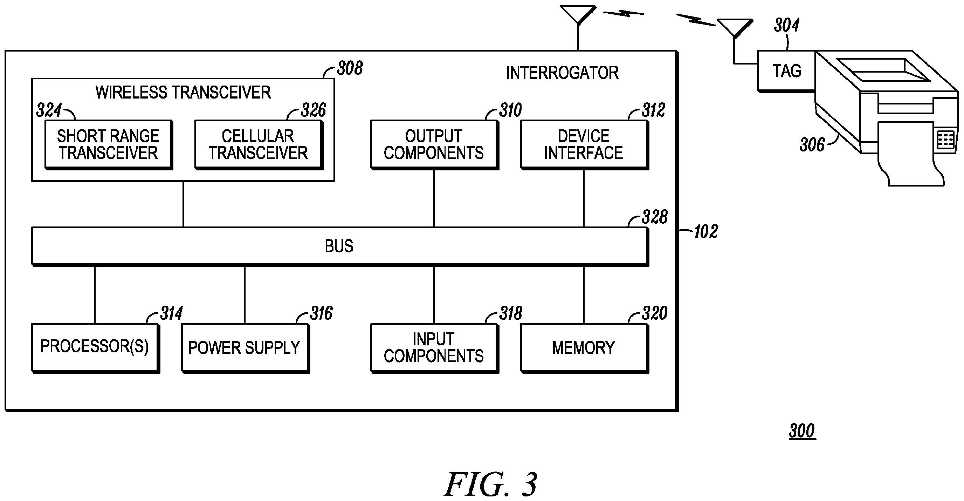

The interrogator device 102 communicates messages to the tag device 104, the electronic device 106 as well as displays messages to a user. As such, the interrogator 102 is configured with internal components to support this variety of messaging. FIG. 3 is a schematic diagram illustrating example internal components of an interrogator device and an example environment 300 in which may be implemented methods and apparatus in accordance with the present teachings. Also included in FIG. 3 are a tag device 304 and an electronic device 306. The tag device 304 represents either of the tag devices 104, 204 of FIGs. 1 or 2. The electronic device 306 coupled to the tag device 304, in this example scenario, is a printer.

As FIG. 3 illustrates, the internal hardware elements or components of the interrogator 102 include a wireless transceiver 308, output components 310, a device interface 312, processor(s) 314, a power supply 316, input components 318, and a memory 320 all in communication with one another, by way of one or more internal communication links 328 (e.g., an internal bus).

As included within the interrogator device 102, the wireless transceiver 308 particularly includes a short range transceiver 324 and a cellular transceiver 326. The short range transceiver 324 is configured to communicate with a tag device using one or more RFID standards previously mentioned in connection with the FIG. 1 description of the tag device 104. The cellular transceiver 326 is configured to conduct cellular communications of data over wireless connections using any suitable wireless technology, such as Third Generation (3G), Fourth Generation (4G), 4G Long Term Evolution (LTE), vis-à-vis cell towers or base stations. In other embodiments, the cellular transceiver 326 is configured to utilize any of a variety of other cellular-based communication technologies such as analog communications (using Advanced Mobile Phone System - AMPS), digital communications (using Code Division Multiple Access (CDMA), Time Division Multiple Access (TDMA), Global System for Mobile communication (GSM), integrated Digital Enhanced Network (iDEN), General Packet Radio Service (GPRS), Enhanced Data for GSM Evolution (EDGE), etc.), and/or next generation communications (using Universal Mobile Telecommunication System (UMTS), Wideband CDMA (WCDMA), LTE, IEEE 802.16, etc.) or variants thereof.

The output components 310 include: one or more visual output components such as a liquid crystal display and/or light emitting diode indicator; one or more audio output components such as a speaker, alarm, and/or buzzer; and one or more mechanical output components such as a vibrating mechanism. One or more of the output components 310, such as the liquid crystal display, light emitting diode and/or the speaker, are used to communicate messages to a user operating the interrogator device 102. Such messages include, for example, messages concerning the state of the electronic device 306 as well as messages concerning operations of the interrogator 102 in relation to the tag device 304 and the electronic device 306.

The device interface 312 includes a user interface which enables a human to interact with the interrogator device 102. In one example scenario, the device interface 312 enables a person to configure components of the interrogator 102, such as the memory 320, with information pertaining to operations in accordance with the disclosed teachings.

In this embodiment, the internal components also include a power supply 316, such as a battery, for providing power to the other internal components while enabling the interrogator 102 to be portable. Further, the internal components additionally are configured with input components 318 including imaging apparatus that illustratively includes a visual input; one or more acoustic or audio input components such as one or more transducers (e.g., microphones), including for example a microphone array and beamformer arrangement or a microphone of a Bluetooth headset; and one or more mechanical input components such as a touchscreen display, a flip sensor, keyboard, keypad selection button, and/or switch. The input components 318 enable a user to input information into the interrogator device 102.

One or more processor(s) 314 (e.g., a microprocessor, microcomputer, application-specific integrated circuit, digital signal processor (DSP), etc.) are configured to perform RFID communications with one or more tag devices, such as tag device 304. The processor(s) 314 are also configured to communicate information to the output components 310 to display to a user operating the interrogator 102. Further, the processor(s) 314 are configured to update memory 320 with information pertaining to functions of the interrogator device 102.

The memory 320 encompasses, in some embodiments, one or more memory elements of any of a variety of forms, for example read-only memory, random access memory, static random access memory, dynamic random access memory, etc. The memory 320 stores data that includes, but need not be limited to, operating systems, programs (applications), and informational data used in performing operations of the interrogator device 102.

The short range transceiver 324 of the interrogator 102 is configured to communicate RFID messaging to the tag device 104. As part of this interaction with the tag device 104 the interrogator 102 is configured to manipulate data within the memory 118 of the tag device 104 and/or communicate a signal to the tag device 104. The tag device 104 is configured to respond to the signal using backscattering which is illustratively modulated to communicate a variety of data to the interrogator 102. In this manner the interrogator 102 and the tag device 104 are able to exchange a sequence of messages. FIG. 4 shows one example of a message sequence chart 400 illustrating communications that occur between an interrogator and a tag device in accordance with the present teachings. The following narratives and figures refer to tag device 104, but the example scenarios are equally applicable to the tags 204 and 304. Similarly, the following narratives reference electronic device 106, memory 118 and control element 116, but the specified scenarios are equally applicable to electronic device 306, memory 218 and control element 216.

Looking more closely at the message sequence chart 400 of FIG. 4, the interrogator 102 transmits 402 a short range radio communication signal such as an RFID signal in an attempt to discover a tag. The tag device 104 receives the signal using short range radio communication if the interrogator 102 is close enough to the tag 104. The tag device 104 attempts to extract energy from the received signal and determines from the signal strength level whether to initiate a function in the electronic device 106. In one example, determining from the signal to initiate the function includes determining a level of the signal. The function initiated in the electronic device 106 depends on the level of the signal. As the interrogator 102 comes closer to the tag device 104 the signal at the tag device 104 gets stronger. As the signal gets stronger, the EH rectifier 110 extracts more energy from the signal. Accordingly, the level of the signal and the function initiated in the electronic device 106 depend on the proximity of the interrogator device 102 to the tag device 104. Further, the level of the signal results in an amount of energy extracted from the signal by the EH rectifier 110 in the tag device 104. Thus, the amount of extracted energy and the function initiated in the electronic device 106 depend on the proximity of the interrogator device 102 to the tag device 104.

Once the tag device 104 determines to initiate a function in the electronic device 106, the tag device 104 is configured to send signal 404 to the electronic device 106 in order to initiate the function. In one scenario, the tag device 104 signals the electronic device 106 to at least one of power on or off. In another example scenario, the tag device 104 signals the electronic device 106 to lock or unlock the electronic device 106. Some scenarios include the tag device 104 communicating a signal to the electronic device 106 to modify content stored within the electronic device 106. For example, the tag device 104 signals the electronic device 106 to modify content stored on a hard drive, in volatile memory or in boot parameters of the electronic device 106. In still another scenario, the tag device 104 signals the electronic device 106 to change a setting of the electronic device 106. For example, when the tag device 104 signals the electronic device 106 to power on, the tag device 104 also signals the electronic device 106 to change the language setting to a preferred language. In other examples, the changed setting includes such things as a font setting, screen brightness, input sensitivity, and the like.

In the embodiment illustrated in FIG. 2, the switch 222 is activated when the EH rectifier 110 extracts enough energy. Once the switch 222 is activated, the tag device 104 is configured to signal the electronic device 106 using the energy extracted from the signal. Thus, signaling the electronic device 106 to at least one of power on or power off includes operating the switch 222 in the tag device 104 using the signal to power on or power off the electronic device 106.

If the interrogator 102 is too far away from the tag device 104, the tag device 104 receives a signal that is too weak to initiate a function in the electronic device 106. In this circumstance, a representative tag device 104 is configured to store a status flag or feedback indication in memory 118 noting that the tag device 104 does not have enough energy to initiate a function in the electronic device 106. In one example scenario, the tag device 104 communicates this information to the interrogator 102 via backscattering without prompting from the interrogator 102. In another scenario, the interrogator 102 is configured to read the contents of the memory 118 to determine whether the tag device 104 has enough energy to initiate a function in the electronic device 106. In either circumstance, the tag device 104 provides 406 an indication of the level of the signal as feedback to the interrogator device 102. If the feedback indicates that there is not enough energy to initiate a function within the electronic device 106, the interrogator 102 is configured to set the control flag or control indication in memory 118 so that the tag device 104 initiates the function when it has harvested enough energy.

When the electronic device 106 changes states, such as turning on, turning off, transitioning into a sleep mode, etc., the tag device 104 is configured to receive 408 a status indication from the electronic device 106 noting this change in state. The tag device 104 is configured to then provide 410 the status indication to the interrogator device 102. In one example scenario, the interrogator device 102 receives the status indication and communicates the status to a user operating the interrogator device 102. If the status indication indicates that the electronic device 106 is off, the user has the option of initiating a signal from the interrogator device 102 to turn on the electronic device 106. In this case, the signal that the tag device 104 receives from the interrogator device 102 is received in response to providing the status indication to the interrogator 102 and/or tag 104.

As previously described, the level of the signal and thus the amount of energy extracted from the signal varies depending on the distance between the interrogator device 102 and the tag device 104. Some tag devices are configured to initialize a different function in the electronic device 106 depending on the signal strength that the tag device 104 receives. The control element 116 of the tag device 104 illustratively compares the signal level with at least one threshold of a plurality of thresholds. Depending on the result of this comparison, the control element 116 is configured to initiate one of a plurality of different functions in the electronic device depending on a level of the signal from the interrogator device 102.

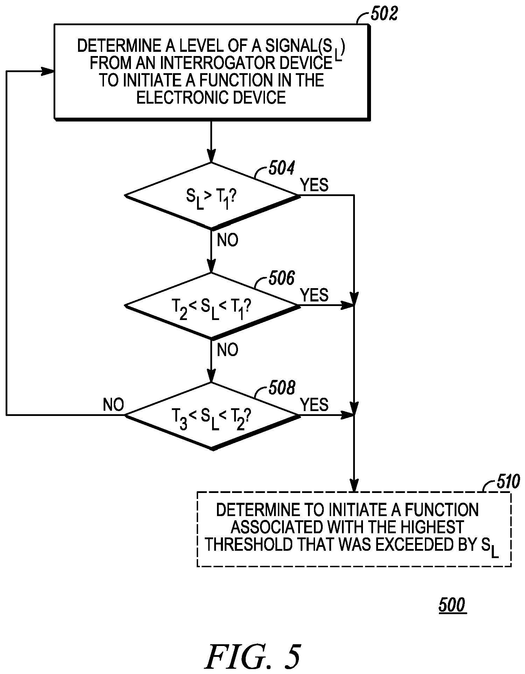

FIG. 5 is a logic flow diagram 500 illustrating a comparison of a signal level with at least one threshold. The tag device 104 initially determines 502 a level of the signal (S_{L}) from the interrogator device 102. In this example the thresholds are ordered from the highest to lowest. Thus, threshold T₁ is a highest threshold and threshold T₃ is a lowest threshold. The tag device 104 compares 504 S_{L} with threshold T₁. If S_{L} does not exceed T₁, the tag device 104 compares 506 S_{L} with threshold T₂. If S_{L} does not exceed T₂, the tag device 104 compares 508 S_{L} with threshold T₃. If S_{L} does not exceed T₃, the tag device 104 continues to determine 502 a next signal level. Illustratively the processor 112 or the control element 116 performs the comparison of the signal level with the various thresholds, but in other embodiments another component of the tag device 104 performs this function.

If the signal level S_{L} exceeds at least one threshold (T₁, T₂, T3), the tag device 104 determines 510 a highest threshold of the plurality of thresholds (T₁, T₂, T₃) that was exceeded by the level of the signal S_{L}. In accordance with the result of the comparison, the tag device 104 determines to initiate a function associated with the highest threshold that was exceeded by the level of the signal. If, for example, S_{L} is greater than T₃, but not greater than T₁ or T₂, the tag device 104 communicates a command to the electronic device 106 to power on the electronic device 106. In another example, if the tag device 104 is coupled to a lock mechanism of a door, the tag device 104 unlocks the door when T₃ is exceeded. In yet other examples, the tag device 104 is configured to perform other functions when S_{L} is greater than T₃.

If S_{L} is greater than T₂ but not greater than T₁, the tag device 104 unlocks the electronic device 106, or turns on a light within a room, for example. The tag device 104 illustratively performs further functions such as, starting an application on the electronic device 106 or turning on a projector within the room when the signal level S_{L} is greater than the threshold T₂. The functions that the tag device 104 initiates when S_{L} is greater than T₃ and T₂ are not limited by the examples disclosed herein.

In other examples other functions are initiated when one or more of the thresholds (T₁, T₂, T₃) is exceeded. The functions initiated in the electronic device 106 vary depending on how the tag device 104 is configured to interoperate with the electronic device 106. For example, if the electronic device 106 is a media player, the tag device 104 initiates the function of tuning to a radio station when one or more of the plurality of thresholds (T₁, T₂, T₃) is exceeded. In another example scenario, the tag device 104 starts various applications, such as a word processor, a drawing tool, and/or a spreadsheet when the electronic device 106 is a work computer and one or more of the thresholds (T₁, T₂, T₃) are exceeded. Although three thresholds (T₁, T₂, T₃) were used in this example, in other examples more or fewer thresholds are applied. Still further, in other scenarios, different functions than those described are performed and the ordering of the comparison of each of the thresholds differs.

In one embodiment, the memory 118 of tag device 104 includes a configurable parameter designating which applications should be started when the signal level exceeds a certain threshold. For example, the status indication, control flag, control indication or another variable includes information concerning which application should be started on the electronic device 106 depending on which threshold is exceeded. In one scenario, a user operates the interrogator 102 to update this variable in memory. In another example scenario these variables are configured during a manufacturing process and this information remains static.

In some embodiments, access to the electronic device 106 or functions of the electronic device 106 is restricted. For such a case, the memory 118 is configured to include a shared secret key. When the interrogator 102 attempts to initiate a function, such as unlock the electronic device 106, the tag device 104 prompts the interrogator 102 for the shared secret key. The tag device 104 only initiates the function in the electronic device 106 if the interrogator 102 provides the correct key. For example, if the interrogator 102 attempts to unlock a door, the tag device 104 prompts the interrogator 102 for the shared secret key and only unlocks the door if the interrogator 102 is able to produce the shared secret key. In this manner, the tag device 104 is configured to control the interrogator's 102 access to the electronic device 106.

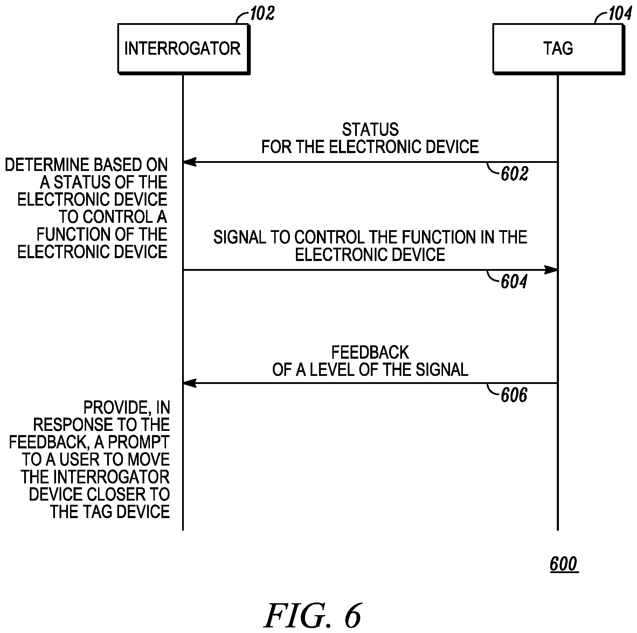

Turning now to FIG. 6 which shows one example of a message sequence chart 600 between an interrogator and a tag device in which the tag device provides feedback and status to the interrogator. The tag device 104 communicates 602 a status (e.g., status indication, status flag) of the electronic device 106 to the interrogator 102 which determines from the tag device 104 coupled to the electronic device 106, a status for the electronic device 106. An example status, includes "on", "off", "asleep", "active", "inactive", and the like. In one scenario, the interrogator 102 sends 604 a signal to the tag device 104 to control a function in the electronic device 106 based on the status for the electronic device 106. The signal to control the status in the tag device 104 in some embodiments controls in the electronic device 106 at least one of powering on or off, locking and unlocking, modifying stored contents, or changing a device setting.

In one example scenario, the tag device 104 communicates a status of "off' to the interrogator 102, the interrogator 102 determines that the electronic device 106 is off and communicates a signal to turn on the electronic device 106. The interrogator 102 is illustratively programmed to communicate this signal automatically, or a message is displayed to a user indicating the status of the electronic device 106 and the user initiates the sending of the signal to control the function in the electronic device 106. In a similar manner, the interrogator 102 is configured to send a signal to lock or unlock the electronic device 106.

In one instance, the interrogator 102 signals the tag device 104 to update contents of the electronic device 106. This includes, for example, updating a local hard drive of the electronic device 106, or updating other volatile or non-volatile memory of the electronic device 106. The interrogator 102 is also configured to update via the tag device 104, a device setting of the electronic device 106. This includes, for example, updating a default language setting, graphical user interface setting, or any other default setting associated with the electronic device 106. The manipulations of the settings illustratively results in the enablement or disablement of various applications and/or components of the electronic device.

The tag device 104 stores in memory 118 the status flag or status indication either of which, in some examples, includes an indication of the level of the signal received at the tag device 104. The indication of the level of the signal includes information such as whether the signal is strong enough to turn on the electronic device 106 or whether the signal is strong enough to initiate functions associated with any of the threshold levels (T₁, T₂, T₃). The tag device 104 either communicates the status indication/flag to the interrogator 102, or the interrogator 102 reads the status indication/flag from the tag device 104 memory 118. When the interrogator receives 606 feedback from the tag device 104 of a level of the signal the interrogator 102 illustratively provides, in response to the feedback, a prompt to move the interrogator device 102 closer to the tag device 104. For example, if the interrogator device 102 determines from the feedback that the signal level at the tag device 104 is not strong enough to turn on the electronic device 106, the interrogator 102 provides via the output component 316 a prompt to the user to move the interrogator 102 closer to the tag device 104. The user then knows to move the interrogator 102 closer to the tag device 104 to initiate a function in the electronic device 106.

In the foregoing specification, specific embodiments have been described. However, one of ordinary skill in the art appreciates that various modifications and changes can be made without departing from the scope of the disclosure as set forth in the claims below. Accordingly, the specification and figures are to be regarded in an illustrative rather than a restrictive sense, and all such modifications are intended to be included within the scope of present teachings.

The benefits, advantages, solutions to problems, and any element(s) that may cause any benefit, advantage, or solution to occur or become more pronounced are not to be construed as a critical, required, or essential features or elements of any or all the claims. The disclosed embodiments are defined solely by the appended claims including any amendments made during the pendency of this application and all equivalents of those claims as issued.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus.

An element proceeded by "comprises ... a," "has ... a," "includes ... a," or "contains ... a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially," "essentially," "approximately," "about" or any other version thereof, are defined as being close to as understood by one of ordinary skill in the art, and in one nonlimiting embodiment the term is defined to be within 10%, in another embodiment within 5%, in another embodiment within 1% and in another embodiment within 0.5%. The term "coupled" as used herein is defined as connected, although not necessarily directly and not necessarily mechanically.

A device or structure that is "configured" in a certain way is configured in at least that way, but may also be configured in ways that are not listed. As used herein, the terms "configured to", "configured with", "arranged to", "arranged with", "capable of' and any like or similar terms mean that hardware elements of the device or structure are at least physically arranged, connected, and or coupled to enable the device or structure to function as intended.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A method performed by an interrogator device (102) for controlling a function in an electronic device (106; 306), the method comprising:
determining, from a tag device (104; 204; 304) coupled to an electronic device, a status for the electronic device ;
sending a signal to the tag device to control a function in the electronic device based on the status for the electronic device;
receiving feedback from the tag device of a level of the signal; and
providing, in response to the feedback, a prompt to move the interrogator device closer to the tag device.

2. The method of claim 1, wherein sending a signal to control the function in the electronic device comprises sending a signal to control in the electronic device at least one of:
powering on or off;
locking and unlocking;
modifying stored contents; or
changing a device setting.

3. The method of claim 1, wherein the level of the signal and the function initiated in the electronic device depend on proximity of the interrogator device to the tag device.

4. The method of claim 1, wherein the signal is sent using short range radio communication.

5. The method of claim 4, wherein the signal is sent via radio frequency identification (RFID) standards.

6. An interrogator device (102) for controlling a function in an electronic device (106; 306), the interrogator device comprising:
a processor (112; 314) configured to:
determine, from a tag device (104; 204; 304) coupled to an electronic device, a status for the electronic device;
send a signal to the tag device to control a function in the electronic device based on the status for the electronic device;
receive feedback from the tag device of a level of the signal; and
provide, in response to the feedback, a prompt to move the interrogator device closer to the tag device.

7. The interrogator device of claim 6, wherein the processor is configured to send a signal to control the function in the electronic device of at least one of:
powering on or off;
locking and unlocking;
modifying stored contents; or
changing a device setting.

8. A method, performed by a tag device (104; 204; 304) that is coupled to an electronic device (106; 306), for initiating a function in the electronic device, the method comprising:
receiving a signal from an interrogator device (102);
determining from the signal to initiate a function in the electronic device; and
signaling the electronic device to initiate the function; wherein
determining from the signal to initiate the function comprises:
determining (502) a level of the signal;
comparing (504, 506, 508) the level of the signal to at least one threshold of a plurality of thresholds;
determining a highest threshold of the plurality of thresholds that was exceeded by the level of the signal;
determining (510) to initiate a function associated with the highest threshold that was exceeded by the level of the signal; and
wherein the level of the signal and the function initiated in the electronic device depend on proximity of the interrogator device to the tag device.

9. The method of claim 8, wherein signaling the electronic device to initiate the function comprises signaling the electronic device to at least one of power on or power off and, optionally, wherein signaling the electronic device to at least one of power on or power off comprises operating a switch (222) in the tag device using the signal to at least one of power on the electronic device or power off the electronic device off.

10. The method of claim 8, wherein the level of the signal comprises an amount of energy extracted from the signal by an energy harvesting rectifier (110) in the tag device, wherein the amount of the extracted energy and the function initiated in the electronic device depend on the proximity of the interrogator device to the tag device.

11. Tag device apparatus (104; 204; 304) comprising:
a signal reception and processing element (108) configured to receive a signal from an interrogator device (102) and determine from the signal to initiate a function in an external electronic device (106; 306); and
a control element (116) coupled to the signal reception and processing element, wherein the control element is configured to signal the electronic device to initiate the function; wherein the signal reception and processing element is configured to determine from the signal to initiate the function by:
determining (502) a level of the signal;
comparing (504, 506, 508) the level of the signal to at least one threshold of a plurality of thresholds;
determining a highest threshold of the plurality of thresholds that was exceeded by the level of the signal;
determining (510) to initiate a function associated with the highest threshold that was exceeded by the level of the signal; and
wherein the level of the signal and the function initiated in the electronic device depend on proximity of the interrogator device to the tag device.

12. The tag device apparatus of claim 11, wherein the signal reception and processing element comprises an energy harvesting rectifier (110) coupled to a processor (112; 314) and configured to:
extract energy from the signal; and
indicate to the control element when a level of the extracted energy is reached that is sufficient to signal the electronic device to initiate the function.

13. The tag device apparatus of claim 12, wherein the control element comprises a switch (222) that is configured to signal the electronic device to initiate the function when the level of the extracted energy exceeds a threshold amount.

## Patentansprüche

1. Verfahren, das durch eine Abfragevorrichtung (102) durchgeführt wird, um eine Funktion in einer elektronischen Vorrichtung (106; 306) zu steuern, wobei das Verfahren Folgendes umfasst:
Bestimmen, von einer Tagvorrichtung (104; 204; 304), die mit einer elektronischen Vorrichtung gekoppelt ist, eines Status für die elektronische Vorrichtung;
Senden eines Signals an die Tagvorrichtung zum Steuern einer Funktion in der elektronischen Vorrichtung basierend auf dem Status für die elektronische Vorrichtung;
Empfangen von Feedback von der Tagvorrichtung bezüglich eines Pegels des Signals; und
Bereitstellen, in Antwort auf den Feedback, eines Prompts zum Bewegen der Abfragevorrichtung näher an die Tagvorrichtung.

2. Verfahren nach Anspruch 1, wobei das Senden eines Signals zum Steuern der Funktion in der elektronischen Vorrichtung ein Senden eines Signals zum Steuern wenigstens eines von Folgenden in der elektronischen Vorrichtung umfasst:
Einschalten oder Ausschalten;
Sperren und Entsperren;
Modifizieren von gespeicherten Inhalten; oder
Ändern einer Einstellung der Vorrichtung.

3. Verfahren nach Anspruch 1, wobei der Pegel des Signals und die in der elektronischen Vorrichtung initiierte Funktion von der Nähe der Abfragevorrichtung zu der Tagvorrichtung abhängen.

4. Verfahren nach Anspruch 1, wobei das Signal unter Verwendung einer kurzreichweitigen Funkkommunikation gesendet wird.

5. Verfahren nach Anspruch 4, wobei das Signal mittels Funkfrequenzidentifikations-(RFID-) Standards gesendet wird.

6. Abfragevorrichtung (102) zum Steuern einer Funktion in einer elektronischen Vorrichtung (106; 306), wobei die Abfragevorrichtung Folgendes umfasst:
einen Prozessor (112; 314), der zu Folgendem konfiguriert ist:
Bestimmen, von einer Tagvorrichtung (104; 204; 304), die mit einer elektronischen Vorrichtung gekoppelt ist, eines Status für die elektronische Vorrichtung;
Senden eines Signals an die Tagvorrichtung zum Steuern einer Funktion in der elektronischen Vorrichtung basierend auf dem Status für die elektronische Vorrichtung;
Empfangen von Feedback von der Tagvorrichtung bezüglich eines Pegels des Signals; und
Bereitstellen, in Antwort auf den Feedback, eines Prompts zum Bewegen der Abfragevorrichtung näher an die Tagvorrichtung.

7. Abfragevorrichtung nach Anspruch 6, wobei der Prozessor dazu konfiguriert ist, ein Signal zum Steuern der Funktion von wenigstens einem von Folgenden in der elektronischen Vorrichtung zu senden:
Einschalten oder Ausschalten;
Sperren und Entsperren;
Modifizieren von gespeicherten Inhalten; oder
Ändern einer Einstellung der Vorrichtung.

8. Verfahren, das durch eine Tagvorrichtung (104; 204; 304) durchgeführt wird, die mit einer elektronsichen Vorrichtung (106; 306) gekoppelt ist, zum Initiieren einer Funktion in der elektronischen Vorrichtung, wobei das Verfahren Folgendes umfasst:
Empfangen eines Signals von einer Abfragevorrichtung (102);
Bestimmen, von dem Signal, dass eine Funktion in der elektronischen Vorrichtung initiiert werden soll; und
Signalisieren der Initiierung der Funktion an die elektronische Vorrichtung; wobei
die Bestimmung der Initiierung der Funktion von dem Signal Folgendes umfasst:
Bestimmen (502) eines Pegels des Signals;
Vergleichen (504, 506, 508) des Pegels des Signals mit wenigstens einer Schwelle von einer Mehrzahl von Schwellen;
Bestimmen einer höchsten Schwelle von der Mehrzahl von Schwellen, die durch den Pegel des Signals überschritten wurde;
Bestimmen (510) einer Initiierung einer Funktion, die der höchsten Schwelle zugeordnet ist, die durch den Pegel des Signals überschritten wurde; und
wobei der Pegel des Signals und die in der elektronischen Vorrichtung initiierte Funktion von der Nähe der Abfragevorrichtung zu der Tagvorrichtung abhängen.

9. Verfahren nach Anspruch 8, wobei das Signalisieren einer Initiierung der Funktion an die elektronische Vorrichtung ein Signalisieren an die elektronische Vorrichtung umfasst, einzuschalten und/oder auszuschalten, und wobei optional das Signalisieren an die elektronische Vorrichtung, einzuschalten und/oder auszuschalten, ein Betätigen eines Schalters (222) in der Tagvorrichtung unter Verwendung des Signals zum Einschalten der elektronischen Vorrichtung und/oder zum Ausschalten der elektronischen Vorrichtung umfasst.

10. Verfahren nach Anspruch 8, wobei der Pegel des Signals eine Menge von Energie umfasst, die von dem Signal durch einen Energiegewinnungsgleichrichter (110) in der Tagvorrichtung extrahiert wird, wobei die Menge der extrahierten Energie und die in der elektronischen Vorrichtung initiierte Funktion von der Nähe der Abfragevorrichtung zu der Tagvorrichtung abhängen.

11. Tagvorrichtungsgerät (104; 204; 304), umfassend Folgendes:
ein Signalempfangs- und Verarbeitungselement (108), das dazu konfiguriert ist, ein Signal von einer Abfragevorrichtung (102) zu empfangen und von dem Signal zu bestimmen, dass eine Funktion in einer externen elektronischen Vorrichtung (106; 306) initiiert werden soll; und
ein Steuerelement (116), das mit dem Signalempfangs- und Verarbeitungselement gekoppelt ist, wobei das Steuerelement dazu konfiguriert ist, der elektronischen Vorrichtung eine Initiierung der Funktion zu signalisieren; wobei das Signalempfangs- und Verarbeitungselement dazu konfiguriert ist, von dem Signal die Initiierung der Funktion durch Folgendes zu bestimmen:
Bestimmen (502) eines Pegels des Signals;
Vergleichen (504, 506, 508) des Pegels des Signals mit wenigstens einer Schwelle von einer Mehrzahl von Schwellen;
Bestimmen einer höchsten Schwelle von der Mehrzahl von Schwellen, die durch den Pegel des Signals überschritten wurde;
Bestimmen (510) einer Initiierung einer Funktion, die der höchsten Schwelle zugeordnet ist, die durch den Pegel des Signals überschritten wurde; und
wobei der Pegel des Signals und die in der elektronischen Vorrichtung initiierte Funktion von der Nähe der Abfragevorrichtung zu der Tagvorrichtung abhängen.

12. Tagvorrichtungsgerät nach Anspruch 11, wobei das Signalempfangs- und Verarbeitungselement einen Energiegewinnungsgleichrichter (110) umfasst, der mit einem Prozessor (112, 314) gekoppelt und zu Folgenden konfiguriert ist:
Extrahieren von Energie von dem Signal; und
Mitteilen, an das Steuerelement, wann ein Pegel der extrahierten Energie erreicht ist, der ausreichend ist, um der elektronischen Vorrichtung eine Initiierung der Funktion zu signalisieren.

13. Tagvorrichtungsgerät nach Anspruch 12, wobei das Steuerelement einen Schalter (222) umfasst, der dazu konfiguriert ist, der elektronischen Vorrichtung eine Initiierung der Funktion zu signalisieren, wenn der Pegel der extrahierten Energie eine Schwellenmenge überschreitet.

## Revendications

1. Procédé exécuté par un dispositif interrogateur (102) pour la commande d'une fonction dans un dispositif électronique (106 ; 306), le procédé comprenant :
la détermination, à partir d'un dispositif d'étiquette (104 ; 204 ; 304) couplé à un dispositif électronique, d'un statut pour le dispositif électronique ;
l'envoi d'un signal au dispositif d'étiquette pour commander une fonction dans le dispositif électronique sur base du statut du dispositif électronique ;
la réception d'un retour d'informations du dispositif d'étiquette d'un niveau du signal ; et
la fourniture, en réponse au retour d'informations, d'une sollicitation pour rapprocher le dispositif interrogateur du dispositif d'étiquette.

2. Procédé selon la revendication 1, dans lequel l'envoi d'un signal pour commander la fonction dans le dispositif électronique comprend l'envoi d'un signal pour commander dans le dispositif électronique au moins l'un des éléments suivants :
l'allumage ou l'extinction ;
le verrouillage et le déverrouillage ;
la modification du contenu stocké ; ou
le changement d'un réglage d'un dispositif.

3. Procédé selon la revendication 1, dans lequel le niveau du signal et la fonction initiée dans le dispositif électronique dépendent de la proximité du dispositif interrogateur par rapport au dispositif d'étiquette.

4. Procédé selon la revendication 1, dans lequel le signal est envoyé en utilisant une communication radio à courte portée.

5. Procédé selon la revendication 4, dans lequel le signal est envoyé via des normes d'identification par radiofréquence (RFID) .

6. Dispositif interrogateur (102) pour la commande d'une fonction dans un dispositif électronique (106 ; 306), le dispositif interrogateur comprenant :
un processeur (112 ; 314) configuré pour :
déterminer, à partir d'un dispositif d'étiquette (104 ; 204 ; 304) couplé à un dispositif électronique, un statut pour le dispositif électronique :
envoyer un signal au dispositif d'étiquette pour commander une fonction dans le dispositif électronique sur base du statut du dispositif électronique ;
recevoir un retour d'informations du dispositif d'étiquette d'un niveau du signal ; et
fournir, en réponse au retour d'information, une sollicitation pour rapprocher le dispositif interrogateur du dispositif d'étiquette.

7. Dispositif interrogateur selon la revendication 6, dans lequel le processeur est configuré pour envoyer un signal afin de commander la fonction dans le dispositif électronique d'au moins l'un des éléments suivants :
l'allumage ou l'extinction ;
le verrouillage et le déverrouillage ;
la modification du contenu stocké ; ou
le changement d'un réglage d'un dispositif.

8. Procédé exécuté par un dispositif d'étiquette (104 ; 204 ; 304) couplé à un dispositif électronique (106 ; 306) pour l'initialisation d'une fonction dans le dispositif électronique, le procédé comprenant :
la réception d'un signal à partir d'un dispositif interrogateur (102) ;
la détermination à partir du signal d'initier une fonction dans le dispositif électronique ; et
la signalisation au dispositif électronique d'initier la fonction ; dans laquelle
la détermination à partir du signal d'initier la fonction comprend :
la détermination (502) d'un niveau du signal ;
la comparaison (504, 506, 508) du niveau du signal avec au moins un seuil d'une pluralité de seuils ;
la détermination d'un seuil le plus élevé de la pluralité de seuils qui a été dépassé par le niveau du signal ;
la détermination (510) d'initier une fonction associée au seuil le plus élevé qui a été dépassé par le niveau du signal ; et
dans lequel le niveau du signal et la fonction initiée dans le dispositif électronique dépendent de la proximité du dispositif interrogateur par rapport au dispositif étiquette.

9. Procédé selon la revendication 8, dans lequel la signalisation du dispositif électronique pour initier la fonction comprend la signalisation au dispositif électronique d'au moins un parmi un allumage ou une extinction et, en option, dans laquelle la signalisation du dispositif électronique d'au moins un parmi un allumage ou une extinction comprend l'actionnement d'un commutateur (222) dans le dispositif d'étiquette en utilisant le signal pour au moins un parmi l'allumage du dispositif électronique ou l'extinction du dispositif électronique.

10. Procédé selon la revendication 8, dans lequel le niveau du signal comprend une quantité d'énergie extraite à partir du signal par un redresseur de récupération d'énergie (110) dans le dispositif d'étiquette, dans lequel la quantité d'énergie extraite et la fonction initiée dans le dispositif électronique dépendent de la proximité du dispositif d'interrogation avec le dispositif d'étiquette.

11. Appareillage de dispositif d'étiquette (104 ; 204 ; 304) comprenant :
un élément de réception et de traitement de signal (108) configuré pour recevoir un signal à partir d'un dispositif interrogateur (102) et déterminer à partir du signal l'initialisation d'une fonction dans un dispositif électronique externe (106 ; 306) ; et
un élément de commande (116) couplé à l'élément de réception et de traitement de signal, dans lequel l'élément de commande est configuré pour signaler au dispositif électronique d'initier la fonction ; dans lequel l'élément de réception et de traitement de signal est configuré pour déterminer à partir du signal d'initier la fonction par :
la détermination (502) d'un niveau du signal ;
la comparaison (504, 506, 508) du niveau du signal avec au moins un seuil d'une pluralité de seuils ;
la détermination d'un seuil le plus élevé de la pluralité de seuils qui a été dépassé par le niveau du signal ;
la détermination (510) d'initier une fonction associée au seuil le plus élevé qui a été dépassé par le niveau du signal ; et
dans lequel le niveau du signal et la fonction initiée dans le dispositif électronique dépendent de la proximité du dispositif interrogateur par rapport au dispositif étiquette.

12. Dispositif d'étiquette selon la revendication 11, dans lequel l'élément de réception et de traitement de signal comprend un redresseur de récupération d'énergie (110) couplé à un processeur (112 ; 314) et configuré pour :
extraire de l'énergie du signal ; et
indiquer à l'élément de commande quand un niveau d'énergie extraite atteint est suffisant pour signaler au dispositif électronique d'initier la fonction.

13. Appareillage de dispositif d'étiquette selon la revendication 12, dans lequel l'élément de commande comprend un commutateur (222) qui est configuré pour signaler au dispositif électronique d'initier la fonction quand le niveau de l'énergie extraite dépasse une valeur de seuil.
